# DEMANDE DE BREVET EUROPEEN

(11) **EP 4 570 529 A1**
(43) Date de publication de la demande: **18.06.2025**
(21) Numéro de dépôt: 23216681.9
(22) Date de dépôt: 14.12.2023
(51) Int. Cl.: B60C 11/24, B60C 19/00

(54) **PROCÉDÉ ET SYSTÈME POUR DÉTECTER LA FIN DE VIE D'UN PNEU**

(71) Demandeur: The Swatch Group Research and Development Ltd, 2074 Marin (CH)
(72) Inventeur: JACCARD, Jérémie, 1022 Chavannes-Renens (CH)
(74) Mandataire: ICB SA

(57) **Abrégé**

La présente invention concerne un système de surveillance de pneu (1) pour un véhicule pour détecter la fin de vie du pneu (2). Le système (1) comprend : un premier et un deuxième indicateurs d'usure de pneu intégrés dans, ou placés sur le pneu (2) ; le premier et le deuxième indicateurs étant spatialement séparés le long de la circonférence du pneu, et les indicateurs (4) comprenant au moins une partie qui est plus dure que la bande de roulement (3) du pneu ; un accéléromètre (7) intégré dans, ou placé sur le pneu (2), et agencé pour générer un signal d'accéléromètre agencé pour indiquer une vibration du pneu (2) lorsque les indicateurs entrent en contact avec une surface de roulement suite à une usure suffisante du pneu (2) ; et un algorithme de détection agencé pour analyser le signal d'accéléromètre ainsi détectant la vibration du pneu indiquant la fin de vie du pneu (2).

## Description

### DOMAINE TECHNIQUE

La présente invention concerne le domaine des systèmes de surveillance de pneumatique. Plus précisément, elle se rapporte à un système et un procédé destinés à détecter la fin de vie d'un pneu de véhicule motorisé.

### ART ANTÉRIEUR

Les systèmes de surveillance de pneus sont devenus des composants essentiels dans l'industrie automobile moderne, visant à améliorer la sécurité routière et à prolonger la durée de vie des pneus. Actuellement, la plupart de ces systèmes se concentrent sur la détection de la pression des pneus, mais peu offrent des solutions efficaces pour surveiller l'usure des pneus.

La détection précise de l'usure des pneus est cruciale pour garantir des performances optimales, une économie de carburant maximale et une sécurité accrue. Les méthodes existantes pour surveiller l'usure des pneus sont souvent limitées dans leur précision et leur fiabilité. En plus, la plupart des systèmes existants, bien que fonctionnels, présentent une complexité structurelle importante.

Ces systèmes complexes comprennent souvent une multitude de composants, tels que des capteurs sophistiqués, des réseaux de communication étendus et des unités de traitement de données volumineuses. Cette complexité structurelle rend non seulement l'installation et la maintenance coûteuses, mais peut également entraîner des problèmes opérationnels en raison de la défaillance potentielle de l'un de ces nombreux éléments.

### RÉSUMÉ D'INVENTION

Un objectif de la présente invention est de surmonter au moins certains des inconvénients identifiés ci-dessus relatifs aux systèmes de surveillance de pneus.

Selon un premier aspect de l'invention, il est proposé un système de surveillance de pneu pour détecter la fin de vie d'un pneu d'un véhicule tel qu'énoncé dans la revendication 1.

La présente invention offre plusieurs avantages par rapport aux systèmes existants de surveillance de pneus, mettant en lumière sa simplicité structurelle, sa facilité d'intégration aux pneus existants, et sa capacité fiable à détecter la fin de vie d'un pneu. Plus spécifiquement, contrairement aux systèmes de surveillance de pneus actuels, la présente invention se distingue par sa simplicité structurelle. En réduisant le nombre de composants nécessaires, elle simplifie non seulement le processus de fabrication, mais elle offre également une solution plus économique en termes de coûts de production et de maintenance. Cette simplicité accrue contribue à une fiabilité opérationnelle renforcée, en minimisant les risques de défaillance dus à une complexité excessive. En outre, le deuxième avantage de la présente invention est sa capacité à être facilement intégrée aux pneus existants sur le marché. Grâce à sa conception, le système de surveillance selon la présente invention peut être installé de manière efficace sur une variété de pneus, offrant ainsi une flexibilité d'utilisation sur différents types de véhicules, tels que automobiles. Cette facilité d'intégration réduit les contraintes liées à la compatibilité et élargit la portée d'application de l'invention. La présente invention résout également le défi de la détection précise de la fin de vie des pneus. Le système selon la présente invention surveille de manière fiable l'usure d'un pneu, permettant une détection immédiate dès que le pneu a atteint sa limite d'utilisation sécuritaire. Cette fonctionnalité contribue ainsi à une sécurité routière améliorée.

Selon un deuxième aspect de l'invention, il est proposé un procédé pour détecter la fin de vie d'un pneu d'un véhicule tel qu'énoncé dans la revendication 15.

D'autres aspects de l'invention sont exposés dans les revendications dépendantes ci-jointes.

### DESCRIPTION DES DESSINS

D'autres caractéristiques et avantages de l'invention ressortiront de la description suivante d'un mode de réalisation non limitatif, en référence aux dessins annexés, dans lesquels :
- La figure 1 illustre un système de surveillance de pneu selon un exemple de la présente invention ;
- La figure 2 montre un pneu en coupe transversale prise le long de la ligne A-A comme le montre la figure 1 ; et
- La figure 3 montre un exemple du signal émis par un accéléromètre du système de surveillance de pneu.

### DESCRIPTION DÉTAILLÉE D'UN MODE DE RÉALISATION PRÉFÉRÉ

Un mode de réalisation de la présente invention sera ensuite décrit en détail en référence aux figures annexées. Les éléments fonctionnels et structurels identiques ou correspondants qui apparaissent dans différents dessins reçoivent les mêmes numéros de référence. Tel qu'utilisé ici, « et/ou » désigne un ou plusieurs éléments de la liste joints par « et/ou ». À titre d'exemple, « x et/ou y » désigne n'importe quel élément de l'ensemble de trois éléments {(x), (y), (x, y)}. En d'autres termes, « x et/ou y » signifie « l'un ou les deux de x et y ». Comme autre exemple, « x, y et/ou z » désigne n'importe quel élément de l'ensemble de sept éléments {(x), (y), (z), (x, y), (x, z), (y , z), (x, y, z)}. En d'autres termes, « x, y et/ou z » signifie « un ou plusieurs parmi x, y et z ». De plus, le terme « comprendre » est utilisé ici comme un terme ouvert. Cela signifie que l'objet englobe tous les éléments mentionnés, mais peut également inclure des éléments supplémentaires non-mentionnés. Ainsi, le mot « comprendre » est interprété dans le sens plus large de « inclure » ou « contenir ».

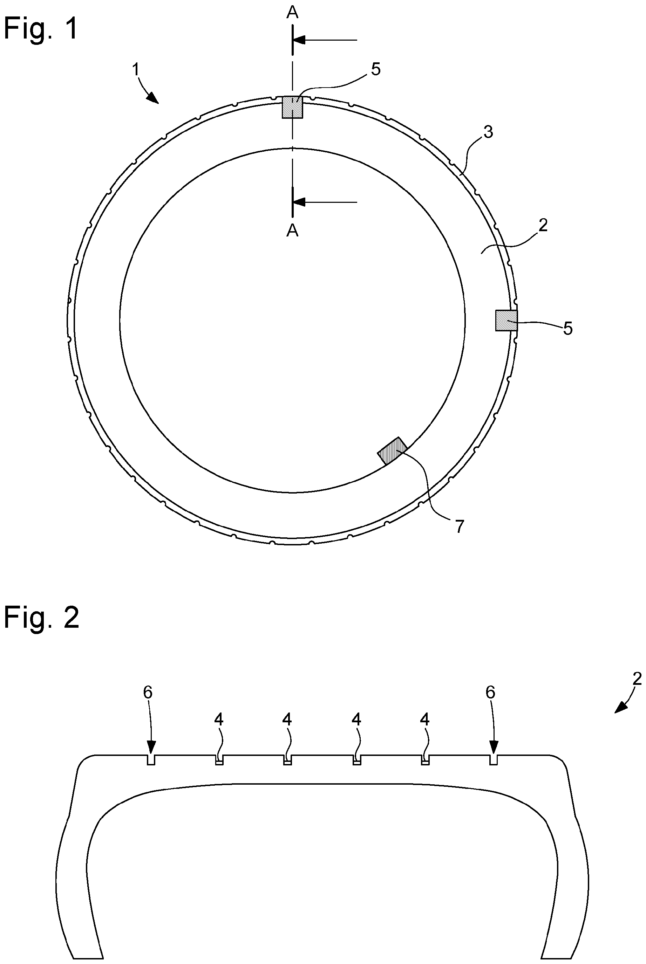

La figure 1 illustre dans une vue latérale un système de surveillance de pneu 1 comprenant entre autres un pneu 2 d'une voiture dont la bande de roulement 3 est agencée pour être en contact avec une surface de roulement (non-illustrée). La figure 2 montre une vue en coupe du pneu 2 prise le long de la ligne A-A comme le montre la figure 1. La figure 2 montre aussi un indicateur d'usure de pneu 4, également appelé « témoin » ou « indicateur de profondeur de sculpture ». Un indicateur d'usure de pneu sur un pneu traditionnel est une caractéristique qui sert d'indication visuelle de la profondeur restante de la sculpture. L'indicateur peut ainsi être intégré dans, ou placé sur le pneu. La profondeur de la sculpture est importante pour maintenir la traction, la tenue de route et la sécurité globale, surtout dans des conditions humides ou glissantes. Les indicateurs d'usure de pneu sont conçus pour aider les conducteurs à évaluer quand il est temps de remplacer leurs pneus.

Selon la présente invention, le pneu 2 comprend au moins deux indicateurs d'usure de pneu 4 placés à deux endroits distincts sur le pneu. La figure 1 montre une première région ou zone d'indicateur 5 et une deuxième région ou zone d'indicateur 5, qui sont spatialement séparées le long de la circonférence du pneu 2. Dans le présent exemple, le pneu comprend deux indicateurs d'usure de pneu 4 spatialement séparés le long de la circonférence du pneu 2. Dans le présent exemple, les indicateurs d'usure de pneu sont de petits ponts ou barres de caoutchouc surélevés qui sont placés autour de la circonférence du pneu et dans cet exemple sont disposés perpendiculairement à la sculpture du pneu. Les indicateurs d'usure de pneu sont selon le présent exemple placés dans une ou plusieurs rainures 6 de la sculpture du pneu. Les rainures s'étendent longitudinalement le long de la circonférence du pneu. En alternative ou en complément, les indicateurs 4 peuvent se trouver dans une rainure du motif de la sculpture. Ils sont généralement positionnés à une profondeur correspondant à la profondeur minimale légale de sculpture pour une conduite en toute sécurité. Dans de nombreuses régions, la profondeur minimale légale de sculpture est d'environ 1.6 millimètres. Si le pneu comprend plus de deux indicateurs, ils peuvent être placés à intervalles réguliers ou irréguliers autour de la circonférence du pneu.

À mesure que la sculpture du pneu s'use en raison d'une utilisation normale, la hauteur du caoutchouc du pneu diminue. Lorsque la profondeur de la sculpture atteint un certain point, les indicateurs d'usure deviennent au niveau du reste de la sculpture, c'est-à-dire au niveau de la bande de roulement 3 et donc affleurent la bande de roulement créant ainsi un signal visuel. Dit autrement, lorsque le pneu est usé au point où ces indicateurs sont au niveau du reste de la sculpture, cela indique que le pneu a atteint la profondeur minimale légale de sculpture et qu'il est temps de le remplacer. Le pneu a donc atteint la fin de vie.

Selon la présente invention, le premier indicateur 4 est caractérisé par une première dureté, le deuxième indicateur 4 est caractérisé par une deuxième dureté, et la bande de roulement est caractérisée par une troisième dureté, où la première et la deuxième duretés sont plus élevées que la troisième dureté. Plus précisément, la première dureté et/ou la deuxième dureté est/sont au moins 5% ou plus spécifiquement au moins 15% ou 30% plus élevée(s) que la troisième dureté. Autrement dit, les indicateurs d'usure de pneu sont légèrement plus durs ou solides que la bande de roulement et/ou les indicateurs possèdent des propriétés mécaniques différentes de celles de la bande de roulement. Cela signifie que dès que le pneu s'est suffisamment usé pour que les indicateurs d'usure de pneu entrent en contact avec la surface de roulement, les indicateurs s'usent plus lentement que la bande de roulement générant ainsi une vibration lorsque le pneu tourne sur la surface de roulement. Cette vibration n'est pas perceptible par l'usager ni ne dégrade la sécurité du véhicule. Toutefois, même si les indicateurs s'usent à la même vitesse que la bande de roulement, la solution proposée par la présente invention fonctionne quand même. En théorie, le simple fait que les indicateurs soient plus durs pourrait être détecté par un accéléromètre 7 comme expliqué plus loin.

La solidification des indicateurs d'usure de pneu pourrait s'obtenir par exemple à l'aide d'une résine appliquée après fabrication du pneu ou développé par un potentiel fabriquant de pneu partenaire. La résine appliquée à une surface forme un revêtement ou à un matériau qui contient une substance résineuse. La résine utilisée dans ce contexte est souvent une substance polymérique qui, lorsqu'elle est appliquée sur une surface, crée une couche plus dure ou protectrice. Ce type de résine est généralement liquide au moment de l'application, mais elle durcit ensuite pour former un revêtement solide et résistant. De cette manière l'on peut obtenir un revêtement, tel qu'un revêtement époxy, utilisant des résines pour créer une surface durable, résistante à l'usure.

Une autre approche pourrait être un surmoulage des zones des indicateurs d'usure de pneu lors de la fabrication des pneus.

Une troisième approche pourrait avoir une âme de pneu, c'est-dire la partie intérieure du pneu, dans un caoutchouc/matière du pneu avec des propriétés mécaniques différentes de celles de la bande de roulement. L'âme formant l'indicateur d'usure de pneu serait donc plus dure que la bande de roulement. Cette différence doit permettre d'avoir une autre signature une fois la bande de roulement usée. Selon cette variante, le premier indicateur et/ou le deuxième indicateur forme/forment ainsi un élément à l'intérieur de la matière du pneu et qui n'est pas exposé sur la bande de roulement 3 dans un état neuf du pneu 2.

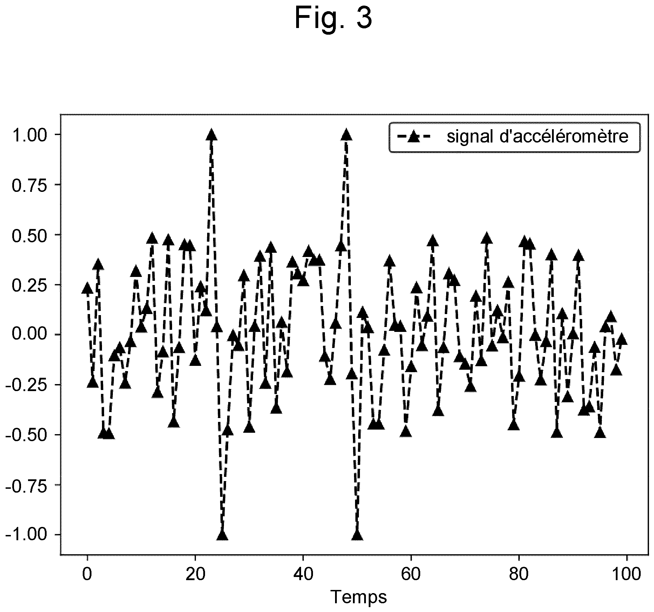

Le système de surveillance de pneu 1 comprend également un accéléromètre 7, qui est agencé pour ressentir une légère vibration périodique lorsque les indicateurs d'usure sont atteints à cause de l'usure de la bande de roulement. L'accéléromètre est connecté à, ou il comprend un élément fournissant de l'énergie, tel qu'une batterie, pile, etc. La figure 3 montre le signal généré par l'accéléromètre. Ce signal peut être appelé signal d'accéléromètre. L'axe X représente le temps, tandis que l'axe Y représente l'amplitude du signal. Deux pics ou pointes plus hauts sont clairement visibles, qui résultent du contact des deux indicateurs d'usure de pneu avec la surface de roulement. Le signal représenté sur la figure correspond à un tour complet du pneu. Les deux pics se répètent à intervalles réguliers pendant que le pneu tourne en supposant que la vitesse du véhicule reste constante. Les indicateurs doivent ainsi être suffisamment durs et résistants pour être détectés par l'accéléromètre mais suffisamment souples pour ne pas être détectés par l'utilisateur du véhicule, le tout en tenant compte des contraintes environnementales et sécuritaires.

L'accéléromètre 7 peut être placé pratiquement à n'importe quelle position sur le pneu. Par exemple, il peut être intégré à la valve. Certaines valves de pneus de l'art antérieur incluent un système de surveillance de pression de pneu. Dans ce cas, l'accéléromètre 7 peut éventuellement être intégré au système de surveillance de pression de pneu. Selon une variante, l'accéléromètre 7 peut être placé par exemple sur une face latérale intérieure ou extérieure du pneu.

Le système de surveillance de pneu 1 comprend de plus un circuit d'analyse ou microcontrôleur mettant en oeuvre un algorithme de détection agencé pour analyser le signal d'accéléromètre, et qui peut être intégré dans l'accéléromètre ou il peut être fourni sous la forme d'un élément autonome, tel qu'un système central du véhicule, configuré pour communiquer par exemple sans fil avec l'accéléromètre. Dans le cas où l'algorithme serait trop compliqué à intégrer dans l'accéléromètre, on pourrait avoir une solution où les données brutes sont transmise au système central, qui possède une plus grande puissance de calcul et qui s'occuperait de la détection. Cette solution serait envisageable car la détection n'a pas besoin de se faire très souvent étant donné qu'un pneu s'use en général plutôt lentement. Dans le cas où le système de détection est intégré au système central, il est aussi possible de lier la fréquence de mesure au nombre de kilomètres parcourus afin d'économiser de l'énergie et de mieux cibler la période critique. L'algorithme de détection peut se faire à l'aide d'une analyse fréquentielle. Par exemple, de cette manière la transformation de Fourier rapide (FFT) peut extraire une fréquence et une phase cohérente correspondant à la répartition des indicateurs d'usure de pneu sur le pneu, et qui rejette de ce fait une simple vibration due à un caillou coincé dans une rainure. FFT est un algorithme de calcul de la transformation de Fourier discrète (TFD). La phase entre deux signaux est une mesure du décalage temporel relatif ou du déplacement de leurs formes d'onde. La phase est souvent mesurée en degrés ou en radians et représente la fraction d'un cycle écoulée.

Le signal d'accéléromètre est agencé pour indiquer une vibration du pneu 2 lorsque les indicateurs 4 entrent en contact avec une surface de roulement suite à une usure suffisante du pneu. Le signal d'accéléromètre présente un ensemble de caractéristiques, tels qu'un ensemble de pics, indiquant la vibration du pneu 3. L'algorithme de détection est agencé pour analyser le signal d'accéléromètre et identifier les caractéristiques, tels que les pics, ainsi détectant la vibration du pneu indiquant la fin de vie du pneu.

Pour pouvoir rejeter de manière fiable une vibration due à un caillou, la séparation angulaire des deux indicateurs 4 sur la circonférence du pneu 2 s'écarte de 180 degrés. Plus spécifiquement, la séparation angulaire s'écarte de 180 degrés par au moins 10 degrés, ou pour être plus précis par au moins 20 degrés ou 30 degrés. L'angle de séparation de deux points le long de la circonférence du pneu est appelé « angle au centre ». Cet angle mesure la séparation angulaire entre deux rayons tracés du centre du pneu (qui est un cercle) vers les deux indicateurs sur la circonférence. En d'autres termes, c'est l'angle formé par l'intersection des lignes allant du centre aux deux points (indicateurs) du cercle. Par conséquent, de préférence, les deux indicateurs 4 ne sont pas diamétralement opposés. Dans le présent exemple spécifique, la séparation angulaire entre les deux indicateurs est de substantiellement 90 degrés. Il est à noter que la séparation angulaire de 180 des deux indicateurs conduirait à un signal d'accéléromètre où les pics se répéteraient à intervalles réguliers en supposant que la vitesse « V » du véhicule est constante. Le signal similaire pourrait être généré par un caillou lorsqu'il est coincé dans la bande de roulement du pneu si la vitesse du véhicule est V×2.

L'algorithme de détection pourrait alternativement ou en complément être un réseau d'intelligence artificielle, tel qu'un réseau de neurones artificiels. Ce réseau pourrait d'abord être entraîné en utilisant des données d'entraînement aux vibrations pour entraîner le réseau à détecter correctement des modèles de vibrations particuliers à partir du signal d'accéléromètre, qui peut être relativement bruité. L'algorithme forme ainsi un algorithme intelligent. Il est donc possible que aucun pic ne soit clairement visible dans le signal d'accéléromètre, mais que le réseau de neurones soit capable de quand même détecter la fin de vie du pneu basé sur un signal qui parait complètement bruité.

De plus, l'algorithme de détection pourrait alternativement ou en complément être ou comprendre un filtre, tel qu'un filtre de Kalman, qui est un algorithme de traitement du signal utilisé pour estimer l'état d'un système dynamique à partir d'une séquence d'observations bruitées. Pour correctement extraire les pics du signal d'accéléromètre, on peut définir un ou plusieurs critères pour extraire les pics du signal. Par exemple, si les pics sont associés à des valeurs d'état dépassant un seuil, on peut les identifier en surveillant ces valeurs.

Le système de surveillance de pneu 1 peut être agencé pour communiquer, par exemple sans fil, avec un système de contrôle ou système central du véhicule afin que le système puisse alerter le conducteur dès que la fin de vie d'un ou plusieurs pneus a été détectée. Cet événement peut également être enregistré dans le système de contrôle ou système central ou ailleurs afin que l'événement puisse être inspecté ultérieurement. L'alerte peut être affichée sur un ou plusieurs écrans du véhicule et/ou une alerte acoustique peut être émise.

Selon une variante de la présente invention, le système de surveillance de pneu 1 comprend également un ou plusieurs gyroscopes et/ou gyromètres, donnant la vitesse angulaire du pneu. Le système comprendrait ainsi une centrale inertielle (« IMU »). Selon cette variante, il serait possible que le gyroscope aide à la détection de la fin de vie du pneu.

Compte tenu de ce qui précède, comparé aux systèmes de surveillance de pneus de l'état de la technique, un des avantages principaux de la présente invention est d'ajouter la fonctionnalité de détection de fin de vie d'un pneu avec très peu de moyens supplémentaires par rapport à ce qui existe déjà dans un pneu moderne.

La présente invention se rapporte également à un procédé pour détecter la fin de vie d'un pneu 2 d'un véhicule en utilisant le système de surveillance de pneu comme expliqué ci-dessus. Le procédé comprend les étapes suivantes : l'analyse par l'algorithme de détection du signal d'accéléromètre et détection de l'ensemble des pics correspondant à la vibration du pneu 2 et représentatifs de la fin de vie du pneu ; et la transmission du résultat de la détection par des moyens de communication sans fil au module de contrôle autonome.

Bien que l'invention ait été illustrée et décrite en détail dans les dessins et la description précédente, une telle illustration et description doivent être considérées comme illustratives ou exemplaires et non restrictives, l'invention n'étant pas limitée au mode de réalisation divulgué. D'autres modes de réalisation et variantes sont compris, et peuvent être réalisés par l'homme du métier lors de la mise en oeuvre de l'invention revendiquée, sur la base d'une étude des dessins, de la description et des revendications annexées.

Dans les revendications, le mot « comprenant » n'exclut pas d'autres éléments ou étapes, et l'article indéfini « un » ou « une » n'exclut pas une pluralité. Le simple fait que différentes caractéristiques soient énoncées dans des revendications dépendantes mutuellement différentes n'indique pas qu'une combinaison de ces caractéristiques ne peut pas être utilisée avantageusement. Les éventuels signes de référence dans les revendications ne doivent pas être interprétés comme limitant la portée de l'invention.

## Revendications

1. Un système de surveillance de pneu (1) pour un véhicule pour détecter la fin de vie du pneu (2), le système (1) comprenant :
- un premier indicateur d'usure de pneu (4) intégré dans, ou placé sur le pneu (2) ;
- un deuxième indicateur d'usure de pneu (4) intégré dans, ou placé sur le pneu, le premier indicateur (4) et le deuxième indicateur (4) étant spatialement séparés le long de la circonférence du pneu, et les indicateurs (4) comprenant au moins une partie qui est plus dure que la bande de roulement (3) du pneu (2) ;
- un accéléromètre (7) intégré dans, ou placé sur le pneu (2), et agencé pour générer un signal d'accéléromètre agencé pour indiquer une vibration du pneu (2) lorsque les indicateurs (4) entrent en contact avec une surface de roulement suite à une usure suffisante du pneu (2) ;
- un algorithme de détection agencé pour analyser le signal d'accéléromètre ainsi détectant la vibration du pneu indiquant la fin de vie du pneu (2).

2. Le système (1) selon la revendication 1, dans lequel le premier indicateur (4) et le deuxième indicateur (4) ne sont pas diamétralement opposés.

3. Le système (1) selon l'une quelconque des revendications précédentes, dans lequel la séparation angulaire du premier indicateur (4) et du deuxième indicateur (4) sur la circonférence du pneu (2) s'écarte de 180 degrés par au moins 10 degrés, ou par au moins 20 degrés ou 30 degrés.

4. Le système (1) selon l'une quelconque des revendications précédentes, dans lequel l'algorithme de détection s'appuie sur une analyse fréquentielle, et/ou comprend un module d'intelligence artificielle, et/ou comprend un filtre.

5. Le système (1) selon la revendication 4, dans lequel le réseau d'intelligence artificielle comprend un réseau de neurones artificiels, et/ou le filtre est un filtre de Kalman.

6. Le système (1) selon l'une quelconque des revendications précédentes, dans lequel le signal d'accéléromètre est un signal substantiellement périodique lorsque le véhicule se déplace à une vitesse substantiellement constante.

7. Le système (1) selon l'une quelconque des revendications précédentes, dans lequel le signal d'accéléromètre présente un ensemble de caractéristiques, tels qu'un ensemble de pics, indiquant la vibration du pneu (2), et l'algorithme de détection est agencé pour analyser le signal d'accéléromètre pour détecter l'ensemble de caractéristiques ainsi détectant la vibration du pneu, et/ou dans lequel l'accéléromètre (7) est intégré dans la valve du pneu (2).

8. Le système (1) selon l'une quelconque des revendications précédentes, dans lequel le premier indicateur (4) est **caractérisé par** une première dureté, le deuxième indicateur (4) est **caractérisé par** une deuxième dureté, et la bande de roulement (3) est **caractérisée par** une troisième dureté, dans lequel la première dureté et/ou la deuxième dureté est/sont au moins 5% ou plus spécifiquement au moins 15% ou 30% plus élevée que la troisième dureté.

9. Le système (1) selon l'une quelconque des revendications précédentes, dans lequel le premier indicateur (4) et/ou le deuxième indicateur (4) forme/forment un élément à l'intérieur de la matière du pneu (2), et qui n'est pas exposé sur la bande de roulement (3) dans un état neuf du pneu (2), et dans lequel l'élément possède des propriétés mécaniques différentes de celles de la bande de roulement (3).

10. Le système (1) selon l'une quelconque des revendications précédentes, dans lequel le premier indicateur (4) et le deuxième indicateur (4) sont placés dans une rainure (6) d'une bande de roulement (3) du pneu (2).

11. Le système (1) selon revendication 10, dans lequel le premier indicateur (4) et/ou le deuxième indicateur (4) comprend/comprennent un revêtement formant une couche plus dure que la partie intérieure de l'indicateur respectif.

12. Le système (1) selon la revendication 11, dans lequel le revêtement contient une substance résineuse.

13. Le système (1) selon l'une quelconque des revendications 10 à 12, dans lequel le premier indicateur (4) et/ou le deuxième indicateur (4) est/sont un/des élément(s) surmoulé(s).

14. Le système (1) selon l'une quelconque des revendications précédentes, dans lequel l'accéléromètre (7) comprend des moyens de communication sans fil pour transmettre le résultat de détection à un module de contrôle autonome.

15. Un procédé pour détecter la fin de vie d'un pneu (2) d'un véhicule en utilisant le système de surveillance de pneu (1) selon l'une quelconque des revendications précédentes, le procédé comprenant :
- l'analyse par l'algorithme de détection du signal d'accéléromètre et la détection de la vibration du pneu (2) indiquant la fin de vie du pneu (2) ; et
- la transmission du résultat de la détection par des moyens de communication sans fil à un module de contrôle autonome.
